# EUROPEAN PATENT SPECIFICATION

(11) **EP 0 366 628 B1**
(45) Date of publication and mention of the grant of the patent: **10.02.1993**
(21) Application number: 89830467.0
(22) Date of filing: 25.10.1989
(51) Int. Cl.: B60Q 1/42

(54) **Steering column switch assembly in particular for heavy duty motor vehicles**
Lenkstockschaltereinrichtung für Lastkraftfahrzeuge
Assemblage d'interrupteur de colonne de direction pour véhicules à poids lourd

(30) Priority: 26.10.1988 IT 2243388
(43) Date of publication of application: 02.05.1990
(73) Proprietor: CAVIS CAVETTI ISOLATI S.p.A., I-15023 Felizzano (Alessandria) (IT)
(72) Inventor: Codrino, Giuseppe, Cavis Cavetti Isolati S.p.A., I-15023 Felizzano (IT)
(74) Representative: Cicogna, Franco

(56) References cited:
- DE-A- 2 228 836
- DE-U- 7 807 568
- GB-A- 1 182 213
- US-A- 3 530 266
- US-A- 4 218 595
- PATENT ABSTRACTS OF JAPAN vol. 8, no. 143 (M-306)(1580) 04 July 1984, & JP-A-59 40961 (NAIRUSU BUHIN KK) 06 March 1984,

## Description

### BACKGROUND OF THE INVENTION

The present invention relates to a steering column switch assembly,which has been specifically designed for heavy duty motor vehicle use.

As is known,steering column switch assemblies are provided for controlling the operation of several elements of a motor vehicle,such as the windshield wipers,direction signalling lamps,projectors and so on.

Presently available steering column switch assemblies are usually very complex construction-wise, since they comprise a plurality of elements which are generally included in a single integral unit bloc:thus, as a single elements fails,the complete unit bloc must be replaced,with consequent high maintenance cost and time.

This fact is further aggravated in steering switch assemblies of heavy motor vehicle,in which the component elements must resist against heavy use conditions and, consequently,have a comparatively high cost.

Another drawback of known steering switch assemblies is that the wiring operations for electrically coupling the switch to the electrical system of the motor vehicle are very complex and require a very long assembly time. The GB-A-1 182 213 document discloses a switch assembly having substantially of the pre-characterizing portion of the main claim

### SUMMARY OF THE INVENTION

Accordingly,the aim of the present invention is to overcome the above mentioned drawbacks,by providing a steering column switch assembly which can be made by quickly and easily assembling a reduced number of modular elements,susceptible to be individually replaced if required.

Within the scope of the above aim,a main object of the present invention is to provide such a switch which is adapted to resists against great and long duration operating stresses.

Another object of the present invention is to provide such a switch in which the electrical contacts can be switched on and off in a very reduced time, thereby preventing electrical arches from occurring.

Yet another object of the present invention is to provide such a steering column switch the electrical contacts of which can be preassembled,at least partially, so as to reduce to a minimum the assembling time and cost.

Yet another object of the present invention is to provide such a switch which is very reliable in operation and greatly competitive from a mere economic standpoint.

According to one aspect of the present invention, the above mentioned aim and objects,as well as yet other objects,which will become more apparent hereinafter,are achieved by a modular element steering column switch assembly,particularly suitable for heavy duty motor vehicles having the features of the characterizing portion of the main claim.

According to a further advantageous feature, to the supporting body modular blocs can be coupled, for controlling the motor vehicle windshield wipers, lights or projectors and direction lamps.

According to yet another advantageous feature, the modular blocs comprise respective control levers, accessible from the underside of the steering wheel and adapted to swing about axes which are substantially parallel to the steering column,control means being provided at the free end portions of the control levers for controlling instantaneous operating functions.

### BRIEF DESCRIPTION OF THE DRAWINGS

Further characteristics and advantages of the present invention will become more apparent from the following detailed description of a preferred embodiment thereof,which is illustrated,by way of an indicative but not limitative example,in the figures of the accompanying drawings,where:
figure 1 is a schematic elevation view illustrating the switch according to the present invention applied to a steering wheel;
figure 2 is a top plan view of the switch according to the invention;
figure 3 is a bottom plan view of the switch according to the invention;
figure 4 is an exploded perspective view of a modular bloc for operating the windshield wipers of a motor vehicle;
figure 5 is a top plan view,as partially cross-sectioned,of the modular bloc for operating the wind-shield;
figures 6 and 7 show two different embodiments of position-indicating roller members included in the switch according to the invention;
figure 8 is an exploded perspective view showing a modular bloc for operating direction signalling lamps,as included in the switch according to the present invention;
figure 9 is a top plan partially sectioned view illustrating the signalling lamp operating modular bloc;
figure 10 is a cross-sectional view taken along the line X-X of figure 9;
figure 11 is a cross-sectional view illustrating one end of a control lever including a control means for controlling instantaneous functions of the motor vehicle,such as a light flash operation or a winshield wiper tripping operation;
   and
figure 12 shows control or drive means for instantaneously operating sound signalling means.

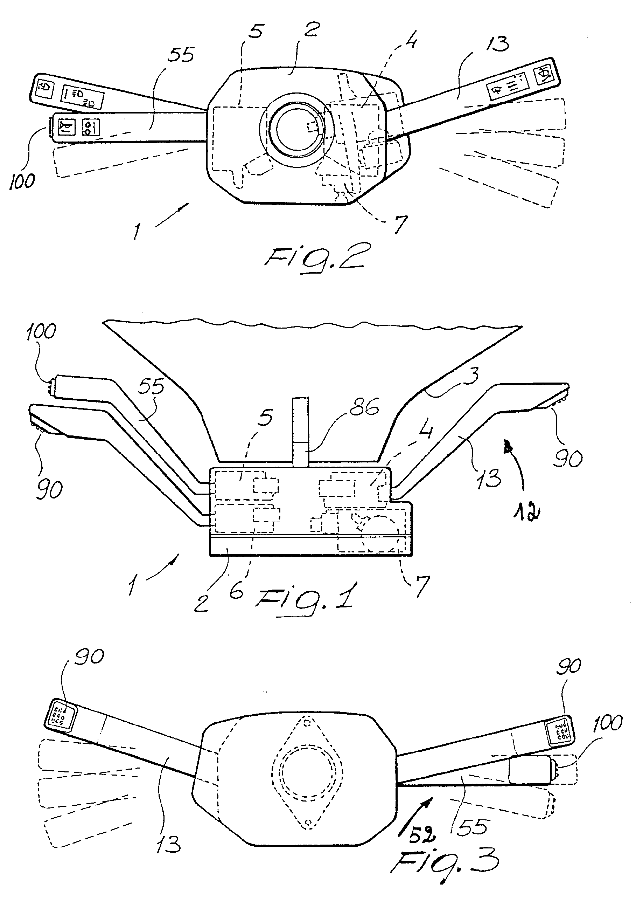

### DESCRIPTION OF THE PREFERRED EMBODIMENTS

With reference to the figures of the accompanying drawings,the modular element steering switch according to the present invention,particularly suitable for heavy duty motor vehicles,which has been generally indicated at the reference number 1, comprises a supporting body 2 which is preferably made by pressure die-casting and may be associated with the steering column of a heavy duty motor vehicle, and indicated generally at the reference number 3.

According to the invention, the supporting body 2 is so designed and arranged as to removably receive a first modular bloc 4 for controlling the motor vehicle windshield wipers,a second modular bloc for controlling the direction indicating lamps,and which has been indicated at 5,and a third modular bloc 6 for controlling the lighting lamps of the motor vehicle.

Moreover,on said supporting body 2,the starting switch 7 can also be applied.

A first main feature of the present invention is that all of the operating or controlling elements consist of modular elements or blocs which can be removably individually applied to the mentioned supporting body and can be individually quickly and easily removed from said supporting body for replacement and the like.

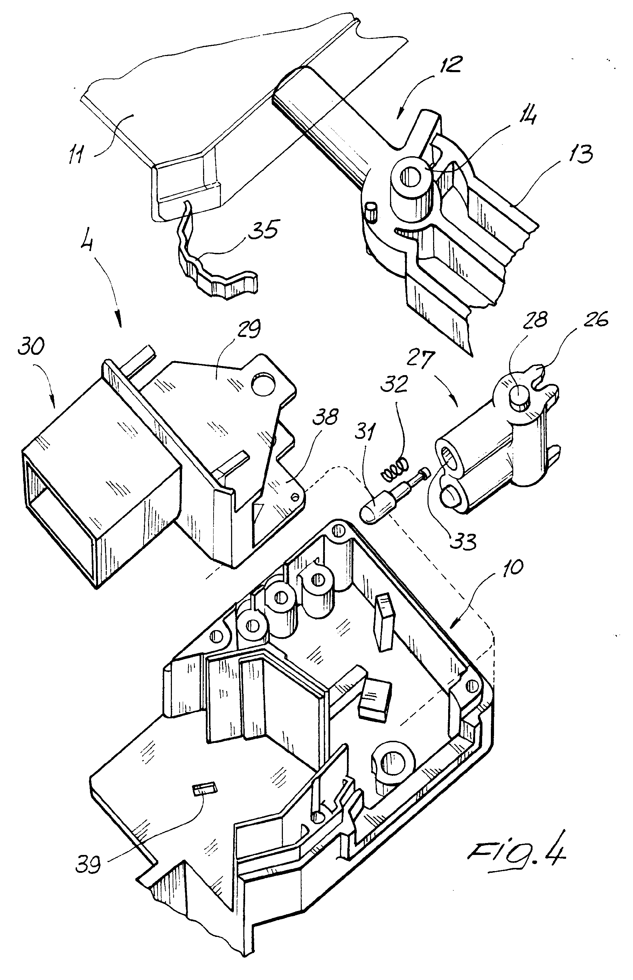

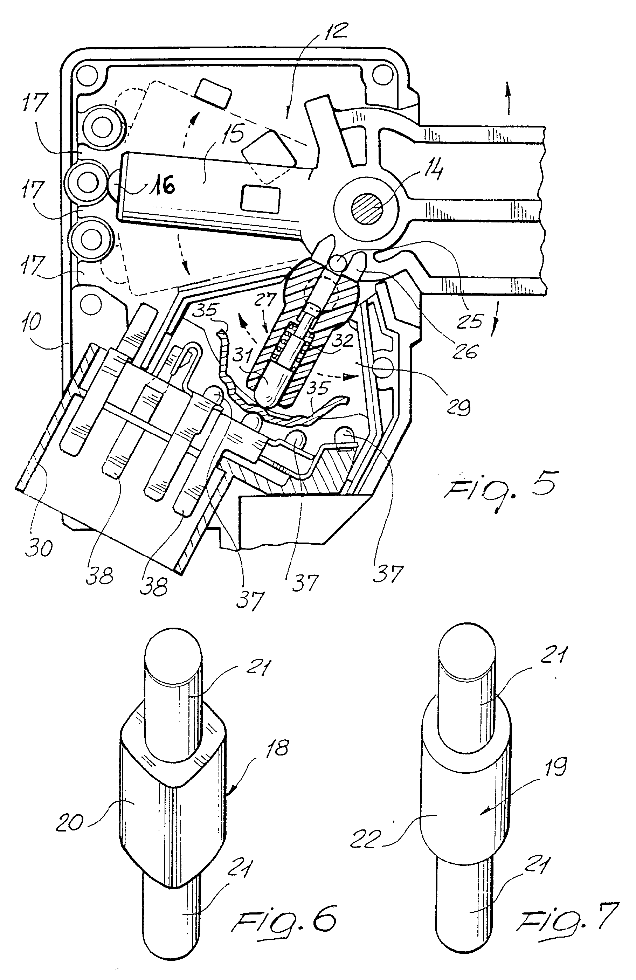

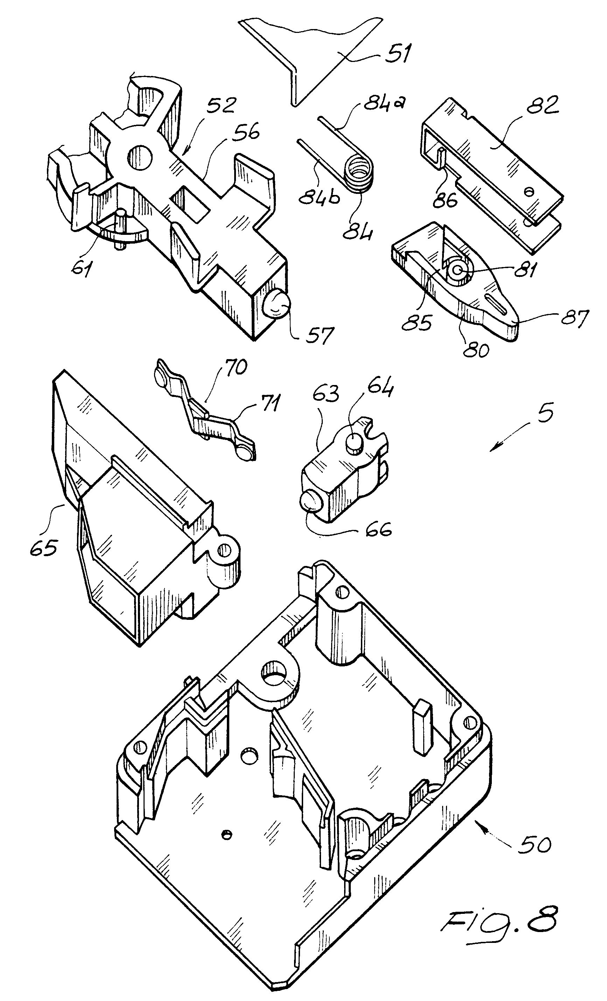

As shown in figure 4,the windshield wiper controlling bloc 4 comprises a base box-like body 10,which can be covered by a protecting covering cap 11.

A lever 12 is coupled to said base body and cover 11,for controlling the windshield wipers,which control lever is provided with a rod like element 13, radially projecting under the steering wheel,and an inner pin 14,which can be engaged in corresponding seats 15,defined in the box-like body 10 in cooperation with the cover 11,so as to provide a swinging capablity about an axis substantially parallel to the axis of the steering wheel column.

The lever 12 is further provided,inside the box-like body 10,with a projection 15 therein there is slidingly housed,under the biassing of resilient means,a point member 16 adapted to define stable positions for said lever 12,depending on the electrical contacts to be actuated.

More specifically,the point member is resiliently biassed to enter locating seats 17,in order to define the precise locations which correspond to the contacts to be made.

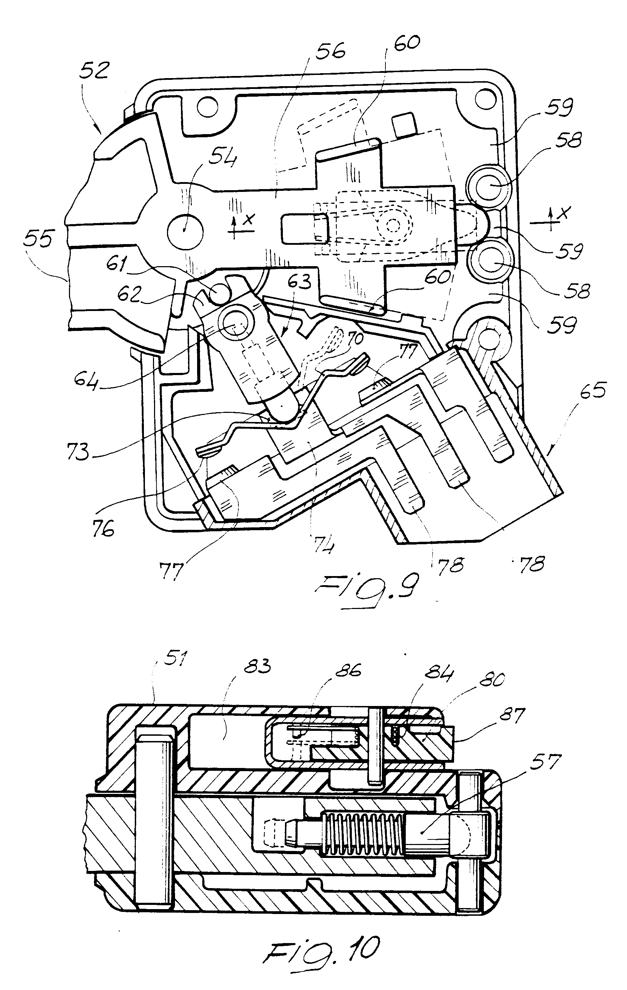

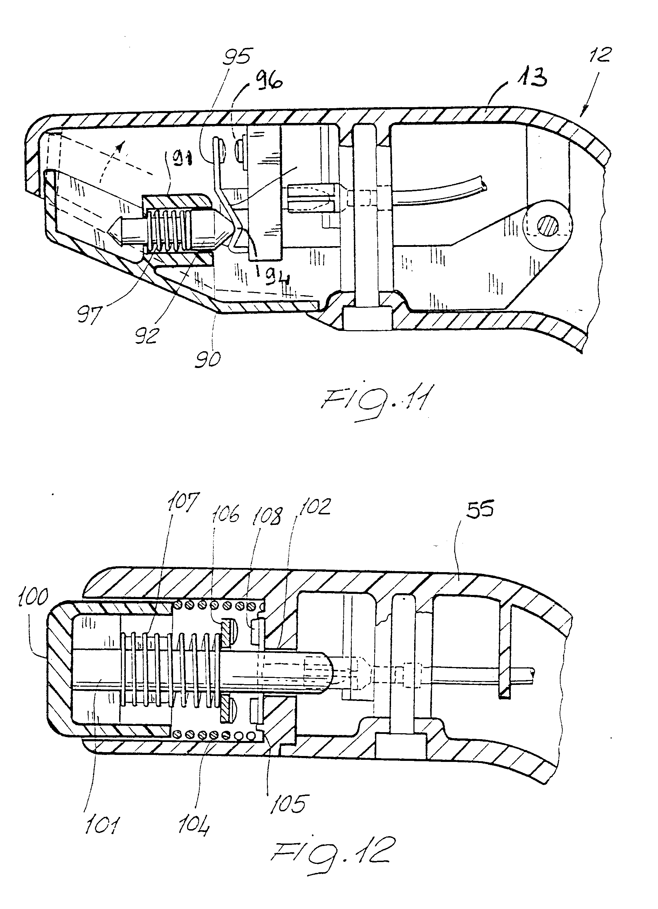

These seats 17 are delimited by location signing or indicating rollers,shown at 18 and 19 in figures 6 and 7,which operate to cause a very quick displacement of the contacts from a position to another so as to suppress,as it will become more apparent hereinafter, sparkings at the electrical contacts.

As shown,the location indicating roller 18 has a quadrangular body 20,with end pins 21 and is rotatably mounted on the box-like body,so as to accelerate the displacement from a seat to another seat.

It has been found from tests that such a quadrangular configuration of the body 20 makes much quicker the displacement of the point member 16 from a seat 17 to another seat and,accordingly,from a location to another location.

A like effect can be obtained by means of the location indicating roller 19,which has a substantially cylindrical central body 22.

The lever 12,which is arranged eccentrically of the pin 14,is provided with pin members 25 which engage with the fork portion 26 of a swinging switch 27,provided with lugs 28 in turn rotatably engaging in the ears of a contact holder,generally indicated at the reference number 30.

The switch 27 is moreover provided with a pair of pressing members 31,which are resiliently biassed by biassing springs 32,housed in hollows 33 formed in said switch 27,said pressing members operating on a movable contact blade,indicated overally at the reference number 35,which is made of a bimetallic strip,preferably a copper layer and a silver layer, and controls a plurality of fixed contacts 37,made of silver,arranged on said contact holder 30.

As the mentioned lever 12 is turned to the locations determined by the point member 16 engaging in the seats 17,the movable contact 35,which has a curved shape,will be snap turned so as to change the electric connexion of the several fixed contacts arranged on said contact holder 30.

More specifically,said contact holder 30 is provided with plug-in members 38 which are co-molded on said contact holder 30 and are prewired before coupling said contact holder 30 and box-like body 10.

The plug-in members 38,in particular,consist each of a wing defined by said contact holder adapted to engage in a corresponding seat or recess formed on the base body 10.

There is moreover provided a bottom tooth member for snap engaging with a recess 39 formed on the base body 10,so as to firmly connect said contact holder 30.

In this connection it should be pointed out that the fixed and movable contacts lay in a substantially vertical plane,thereby dust is prevented from building-up inside the modular assembly,with a consequent less wear of the contacts.

With reference to figures 8 to 10,a modular bloc 5 for operating direction indicating elements will be hereinafter disclosed.

This bloc or assembly comprises a box-like envelope 50 which can be closed by a cover 51.

With the box-like envelope and cover 51 there is rotatably engaged a control level 52,for operating the direction indicating elements,which lever,at 54,is pivoted to the box-like envelope 50 and is provided with a rod like element 55,accessible from the outside of the modular bloc 5.

Inside the box-like envelope or casing 50,the lever 52 is provided with a lug 56 which,in an analogous manner to the above,is provided with a seat therein there is resiliently engaged,under resilient biassing a point member 57,for the direction indicating elements, which operates on location indicating rollers 58 which delimit locating seats 59 in a conceptually analogous way to that which has been disclosed for the seats 17 defined by the location rollers 18 and 19.

The lug 56 is provided with a pair of projecting side wings 60,for automatically recovering to its rest position of the position indicating element lever,as it will be disclosed in a more detailed way hereinafter.

At the pivot point 54,the lever 52 is provided with a pair of eccentric pins 61 which engage with the fork arms 62 of a switch 63 which is rotatably supported on the pins 64 by a contact holder 65,for the direction indicating assembly.

The switch 63 is provided with a contact pressing element 66 which is slidingly housed in the switch 63 and which is resiliently pushed against a swinging contact 70 provided with central ears 71 which are pivoted in recesses 73 defined by a fixed contact blade 74,supported by the contact holder 65.

The swinging contact blade 70 is provided with movable contacts 76 which can be displaced to contact fixed contacts 77 which are electrically coupled to contact blades 78 which are co-molded in the contact holder 65,which in turn can be removably coupled to the direction indicating assembly.

The swinging blade 70 is provided,at its central portion,with recessed portions for accelerating the opening and closing movements of the contacts, in cooperation with the location rollers,in an analogous way to that disclosed for the winshield wiper operating assembly.

The indicating element assembly or bloc is moreover provided with an automatic recovering device comprising an elongated cam 80 which is pivoted at 81 to an U-shaped bracket 82,in turn supported in a hollow 83 defined by the cover 51 applied to the direction indicating bloc.

The cam 80 is provided with a pin spring 84 which is housed in a recessed seat 85 defined on said cam and which has its free end portions 84a and 84b abutting on abutments 86 defined by the mentioned U-shaped bracket 82.

The lug 87,projecting from the U-shaped bracket operates against a recovering or return element which is coupled to the steering wheel and which, by causing said cam 80 to swing,bring it to engage with one of the wings 60,thereby recovering the lever 52 to its rest position,as the cam is rotated in a direction opposite to the steering direction,whilst it does not cause any tripping as the rotation coincides with the steering direction,that is the direction indicated by the direction indicating elements.

As stated,the lever used for operating the modular blocs are exclusively adapted to rotate about axes which are substantially parallel to the steering column,thereby providing a greater mechanical strength.

In order to perform the so-called instantaneous operations,there are provided control means which are coupled to the free ends of the levers.

Figure 11 illustrates the structural arrangement which is advantageously used for flashing the lights and for stepwise operating the winshield wipers.

This structural arrangement comprises a push button 90 which is articulated inside the corresponding control lever,for example the lever 12,and includes a seat 91 therein there is arranged a small plunger 92, which operates in the recessed portion 94 of a movable contact 95 which,as the push button 90 is pressed, brings the movable contact 95 in contact with the fixed contact 96.

The resilient recovering to the rest condition is obtained both due to the provision of the pushing spring 97 which biasses the small plunger 93 and due to the fact that the movable contact is provided with the recessed portion 94 which also provides a push component during the recovering step.

Figure 12 shows a structural arrangement which can be advantageously used for actuating a sound signalling device.

In this embodiment these is provided a push button 100 which is provided with an axial stem 101 slidinbly guided in a hole 102 formed inside the lever,for example the control lever 52.

As shown,the push button 100 is resiliently held in its out position by means of a return spring 104 which operates between said push button and a shoulder 105 defined inside said lever.

Moreover,the stem 101 supports movable contacts 106 which are resiliently biassed by a compensating spring 107,which provides an extra-stroke without forcing the contacts.

In fact,as the movable contacts 106 are displaced to engage with the fixed contacts 108,a further depressing of the push-button 100 does not cause any damages,since there is provided the compensating spring 107 which absorbs the exerted pushing force and which operates to further increase the return force,thereby providing a much more quick separation of the contacts,so as to safely prevent electrical arches from occurring.

From the above disclosure it should be apparent that the invention fully achieves the intended aim and objects.

In particular,the fact is to be pointed out that a steering column switch device has been provided which is completely made from modular elements or blocs,which can be individually applied to a supporting body and individually easily and quickly removed therefrom,for example for replacement.

Another important feature of the invention is that the inventive device comprises levers which can swing exclusively about an axis which is parallel to the steering column axis,thereby providing a stronger structure,mainly a pivoting stronger connection.

Moreover,another important feature of the invention is that the preset positions of the control levers are achieved with a great precision and a very high speed,since there are provided location indicating means which protect the electrical contacts against electrical arches.

With respect to the contacts,a further important feature is that the electrical contacts lay in vertical planes and are housed inside box-like envelopes of substantially tight type,thereby preventing dust from negatively affecting the contacts.

Moreover,owing to the invention,it is possible to prewire the electrical contacts,which further contributes to improve the reliability of the switch and reduce its cost.

While the invention has been disclosed and illustrated with reference to preferred embodiments thereof,it should be apparent that the disclosed embodiments are susceptible to several modifications and variations all of which will come within the spirit and scope of the appended claims.

## Claims

1. A modular element steering column switch assembly (51), particularly suitable for heavy duty motor vehicles, comprising a supporting body (2) for association with the steering column (3) under the steering wheel, modular blocks (4,5,6) adapted to be coupled to said supporting body (2) for operating the windshield wipers, projectors and direction indicating elements of said motor vehicle, said modular blocks (4,5,6) including respective control levers (13,55), accessible from the underside of the steering wheel and adapted to swing about axes substantially parallel to the steering column (3), control means (90,100) being moreover provided at the free end portions of said control lever (13,55) adapted to provide instantaneous operating functions, characterized in that the assembly further comprises, on said supporting body (2), a starting switch (7).

2. An assembly according to Claim 1, in which the modular block (4) for operating the windshield wipers comprises a box-like body (10) with a closure cover (11), between said box-like body (10) and cover (11) there being rotatably supported on an inner pin (14) a lever (12) for operating the windshield wipers said lever (12) being provided, inside said box-like body (10), with a projection (15) therein there is sliadably housed a point member (16), biassed by resilient means and removably engaging with removable locating seats (17) for said lever (12), characterized in that said assembly further comprises location setting rollers (18, 19) for defining the locations of said control levers (13,55), said rollers (18,19) being rotatively supported between said box-like body (10) and said cover (11) therefor.

3. An assembly according to claim 2, characterized in that said rollers (18,19) comprise a substantially quadrangular body (20) with end pins (21) rotatably supported between said box-like body (10) and cover (11), said point member (16) being adapted to contact engage said quadrangular body (20).

4. An assembly according to Claim 2, characterized in that said rollers (18,19) are provided with a substantially cylindrical central body (22).

5. An assembly according to Claim 1, characterized in that the modular block (4) for operating the windshield wipersis provided, on the control lever (13), with pin members (25) engageable with a fork portion (26) of a swinging switch (27) provided with lugs (28) therein there are slidably housed pressing members (31) resiliently biassed by springs (32) and engaging with movable contact blades (35) provided for selectively contacting electrical fixed contacts (37).

6. An assembly according to Claim 5, characterized in that said movable contact blades (35) circumferentially extend and are made of a bimetallic strip, with a copper layer and a silver layer.

7. An assembly according to Claim 5, in which said fixed contacts (37) are supported by a contact holder (30) provided with plug-in elements (38) and adapted to be removably coupled to said box-like body (10), characterized in that said contact holder (30) is provided with a wing to be engaged in a corresponding seat of said box-like body (10) and with a bottom tooth member snap engageable in a recess (39) of said box-like body (10).

8. An assembly according to Claim 5, characterized in that said movable contact blades (35) and fixed contacts (37) lay in a substantially vertical plane.

9. An assembly according to Claim 1, characterized in that the modular block (5) for operating the direction indicating elements comprises a box-like envelope (50) closable by a cover member (51), between said box-like envelope (50) and cover member (51) there being rotatably supported an indicating element lever (52) provided with an inner lug (56), therein there is slidably mounted a point element (57) to be engaged with locating rollers (58), said inner lug (56) being provided with a pair of side projecting wings for automatically recovering to its rest position said indicating element lever (52).

10. An assembly according to claim 9, characterized in that said indicating element lever (52) is provided with a pair of eccentric pins (61) engaging with the fork arms (62) of a switch (63) rotatably supported by a contact holder (65) for said direction indicating block (5).

11. An assembly according to Claim 10, characterized in that said switch (63) slidably supports, through resilient means, a contact pressing member (66) which is resiliently biassed against a swinging contact blade (70), provided with central ears (71) pivoted in hollows (73) defined by a fixed contact blade (74) supported by said contact holder (65).

12. An assembly according to Claim 11, characterized in that said swinging contact blade (70) is provided, at its central portion, with recessed portions adapted to increase the opening and closing speed of the contacts.

13. An assembly according to Claim 1, characterized in that said assembly further comprises an automatic recovering device for automatically recovering to the rest position the lever of said position indicating block, said device comprising an elongated cam (80) pivoted to an U-shaped bracket (82) supported in a hollow (83) of said cover member (51), said cam (80) engaging with a pin spring (84) housed in a recessed seat (85) defined by said cam and having its free end portions (84a, 84b) abutting on abutments (86) of said U-shaped bracket (82), with said cam (80) there being rigid a lug (87) extending from said bracket (82) and engaging with a return element (88) associated with the steering wheel.

14. An assembly according to Claim 1, characterized in that said means for controlling the instantaneous operating functions comprise a pushbutton element (90) pivoted inside its control lever (12) and formed with a seat (91) therein there is housed a plunger (93) operating on the recessed portion (94) of a movable contact (95) which, as said push-button (90) is depressed, brings the movable contact (94) into contact with the fixed contact (96).

15. An assembly according to Claim 1, characterized in that said means for controlling the instantaneous operating functions comprise a pushbutton (100) having an axial stem (101) slidably guided in a hole (102) inside said lever (51), said push-button (100) being resiliently held in an out position by a return spring (104) operating between said push-button and a shoulder (105) formed inside said lever (52), said stem (101) supporting movable contacts (106) which are resiliently urged by a compensating spring (107) adapted to provide an extra-stroke as the contact is actuated.

## Patentansprüche

1. Modularische Lenksäuleschaltereinrichtung (51), die im besonderen für Lastkraftfahrzeuge geignet ist, mit einem Lagerkörper (2) zur Vereinigung unter dem Lenkrad mit der Lenksäule (3), mit modularischen Blöcke (4, 5, 6), die zum Kuppeln mit der obengenannten Lagerkörper (2) fürs Betätigen der Scheibenwischer, mit Scheiwerfer und Richtungsanzeiger des obengenannten Fahrzeuges geeignet sind, wobei die obengenannten modularischen Blöcke (4, 5, 6) mit entsprechenden Kontrollhebeln (13, 55) vorgesehen sind, die aus der unteren Seite des Lenkrades zugänglich und zum Schwenken um wesentlich der Lenksäule (3) parallelen Achsengeeignet sind, wobei, ausserdem, auf den freien Endportionen der obengenannten Kontrollhebeln (13, 55), Kontrollmitteln (90, 100) vorgesehen sind, die zum unmittelbaren Anlassen der Betriebsgänge geeignet sind,
dadurch gekennzeichnet, dass die Einrichtung, ausserdem, auf ihren Lagerkörper (2) einem Anlasschalter (7) weist auf.

2. Einrichtung nach Anspruch 1, wo das modularische Block (4) zum Betätigen der Scheibenwischer ein mit einem Schlussdeckel (11) vorgesehene Kastenkörper (10) einschliesst, wobei zwischen dem obengenannten Kastenkörper (10) und dem Deckel (11), auf einen inneren Zapfen (14) einen Hebel (12) vorgesehen ist, der zum Betätigen der obengenannten Scheibenwischer vorgesehen ist, wobei der obengenannte Hebel (12) innerhalb der obengenannten Kastenkörper (10) mit einer Vorsprung (15) vorgesehen ist, die ein Spitzelement (16) gleitend aufnimmt, das durch kerbzähigen Mittel ausgegliechen werden und mit lösbaren Positionierungssitze (17) für den obengenannte Hebel (12) lösbar eingreift,
dadurch gekennzeichnet, dass die obengenannte Einrichtung, ausserdem mit Positionierungseinstellrollen (18, 19) vorgesehen ist, die die Positionierung der obengenannten Hebeln (13, 55) bestimmen, wobei die obengenannten Rollen (18, 19) zwischen dem obengenannten Kastenkörper (10) und dessen Deckel (11) drehgelagert werden.

3. Einrichtung nach Anspruch 2, dadurch gekennzeichnet, dass die obengenannten Rollen (18, 19) ein wesentlich viereckige Körper (20) einschliessen, der mit Endspitzen (21) vorgesehen ist, die zwischen den obengenannten Kastenkörper (10) und dessen Deckel (11) drehgelagert werden, wobei das Spitzelement (16) zum berührenden Eingreifen des obengenannten viereckigen Körpers (20) geeignet ist.

4. Einrichtung nach Anspruch 2, dadurch gekennzeichnet, dass die obengenannten Rollen (18, 19) mit einem wesentlich zylindrischen Mittelkörper (22) vorgesehen sind.

5. Einrichtung nach Anspruch 1, dadurch gekennzeichnet, dass das modularische Block (4) zum Betätigen der Scheibenwischer, auf den Kontrollhebel (13) mit Spitzelementen (25) vorgesehen ist, die mit einer Gabelportion (26) eines Schwenkschalters (27) eingreifbar ist, der mit Vorsprungen (28) vorgesehen ist, worin durch Federn (32) kerbzähig ausgegliechen Druckelementen (31) gleitend aufgenommen sind, und mit beweglichen Kontaktblättchen (35) eingreift, die zum Auswählkontakten von festen elektrischen Kontakte (37) vorgesehen sind.

6. Einrichtung nach Anspruch 5, dadurch gekennzeichnet, dass die bewegbaren Kontaktblättchen (35) umfangs erstrecken sich und aus einer mit einer Kupferschicht und einer Silberschicht vorgesehenen bimetallischen Streifen bestehen.

7. Einrichtung nach Anspruch 5, wo die obengenannten festen Kontakte (37) durch einen mit Spitzelementen (38) vorgesehene und zur abnehmbaren Kupplung mit dem obengenannten Kastenkörper (10) geeignete Kontakthalter (30) gelagert werden, dadurch gekennzeichnet, dass der obengenannte Kontakthalter (30) mit einer in einem entsprechenden Sitz des obengenannten Kastenkörpers (10) zu eingreifenden Rippe und mit einem unteren Zahnelement vorgesehen ist, das in einer Aufnahme (39) des obengenannten Kastenkörpers (10) auslöseeingreifbar ist.

8. Einrichtung nach Anspruch 5, dadurch gekennzeichnet, dass die obengenannte bewegbaren Kontaktlamellen (35) und festen Kontakte (37) in einer wesentlich senkbaren Ebene liegen.

9. Einrichtung nach Anspruch 1, dadurch gekennzeichnet, dass das modularische Block (5) zum Betätigen der Richtunganzeiger, eine durch ein Deckelelement (51) schliessbare kastenförmige Umhüllung (50) einschsliesst, wobei zwischen der obengenannten kastenförmigen Umhüllung (50) und dem Deckelelement (51) einen Anzeigehebel (52) mit einer inneren Vorsprung (56) drehgelagert wird, worin ein mit Positionierungsrollen (58) zu eingreifende Spitzelement (57) gleitend angeordnet ist, wobei die obengenannte innere Vorsprung (56) mit einem Paar seitlicher Auskragenrippen zur automatischen Rückgewinnung der Ruhestellung für den obengenannte Anzeigehebel (52) vorgesehen ist.

10. Einrichtung nach Anspruch 9, dadurch gekennzeichnet, dass der Anzeigehebel (52) mit einem Paar exzentrischer Zapfen (61) vorgesehen ist, die mit den Gabelarme (62) einer Schalters (63) eingreift, der durch einen Kontakthalter (65) für das obengenannte Richtungsanzeigeblock (5) drehgelagert wird.

11. Einrichtung nach Anspruch 10, dadurch gekennzeichnet, dass der obengenannte Schalter (63), durch kerbzähigen Elemente, ein Kontaktdruckelement (66) gleitend lagert, das gegen eines schwenkbaren Kontaktblättchens (70) kerbzähig ausgewuchtet ist, die mit in Hohlräume (73) angelenkten mittleren Ansätzen vorgesehen ist, die durch eine feste auf den obengenannte Kontakthalter (65) gelagerte Kontaktlamelle bestimmt wird.

12. Einrichtung nach Anspruch 11, dadurch gekennzeichnet, dass das schwenkbare Kontaktblättchen (70), in seiner mittleren Portion, mit aufgenommen Portionen vorgesehen ist, die zum Erhöhen der Öffnungsund Schlussgeschwindigkeit der Kontakte geeignet ist.

13. Einrichtung nach Anspruch 1, dadurch gekennzeichnet, dass diese Einrichtung, ausserdem, eine automatische Rückgewinnungsvorrichtung einschliesst, die zur automatischen Rückgewinnung der Ruhestellung für den Hebel des obengenannten Positionierungsanzeigeblockes dient, wobei diese Vorrichtung mit einer gedehnten Nocke (80) vorgesehen ist, die auf einen in einer Aufnahme der obengenannten Deckelelement (51) gelagerte U-förmige Bügel (82) geschwenkt ist, wobei die obengenannte Nocke (80) mit einer Zapfenfeder (84) eingreift, die in einem durch den obengenannten Bügel bestimmten aufgenommenen Sitz (85) angeordnet ist, dessen freien Endportionen (84a, 84b) auf Anschläge (86) des obengenannten U-förmigen Bügels (82) anschlagen, wobei mit der obengenannten Nocke (80) eine Vorsprung (87) festangeordnet ist, die von dem obengenannten Bügel (82) erstreckt sich und mit einem Rückelement (88) eingreift, das mit dem Lenkrad vereinigt ist.

14. Einrichtung nach Anspruch 1, dadurch gekennzeichnet, dass die obengenannten Mittel zum Überwachen den unmittelbaren Betriebsgänge ein Druckknopfelement (90) weist auf, das innerhalb seinem Kontrollhebel (12) geschwenkt ist und mit einem Sitz (91) vorgesehen ist, worin einer Kolben (93) aufgenommen wird, der auf die aufgenommene Portion (94) eines bewegbaren Kontakt (95) wirkt, der, als der Druckknopf (90) gedruckt wird, den bewegbare KOntakt (94) mit dem festen Kontakt (96) in Verbindung stellt.

15. Einrichtung nach Anspruch 1, dadurch gekennzeichnet, dass die obengenannten Mittel zum Überwachen den unmittelbaren Betriebsgänge einen Druckknopf (100) einschliessen, der eine axiale Spindel (101) weist auf, die in einem Bohr (102) innerhalb des obengenannten Hebels (51) gleitend geführ ist, wobei der obengenannten Druck-knopf (100) in einer Aussenstellung durch einer zwischen dem obengenannten Druckknopf und einem Absatz (105), der innerhalb des obengenannten Hebels(52) gebildet ist,wirkenden Rückfeder (104) kerbzähig gehalten wird, wobei die obengenannte Spindel (101) bewegbaren Kontakten (106) stützt, die durch eine Ausgleichfeder (107) kerbzähig gedruckt werden, die zum Bilden einen Extrahub, als der Kontakt ausgeführt wird, geeignet ist.

## Revendications

1. Assemblage d'interrupteur de colonne de direction à élément modulaire (51), particulairement adapté pour véhicules à régime lourd, comprenant un corps de support (2) pour être associé avec la colonne de direction (3) sous la colonne de direction elle-même, des blocs modulaires (4, 5, 6) aptes à être accouplés audit corps de support (2) pour faire fonction d'essuie-glace, des projecteurs et des feux de direction pour ledit vehicule, lesdits blocs modulaires (4, 5, 6) comprenant des leviers de contrôle (13, 55) qui sont accessibles du côté inférieur de la colonne de direction et sont aptes à osciller autour des axes essentiellement parallèles à la colonne de direction (3), des moyens de contrôle (90, 100) étant prévus en outre sur les portions d'extrémité libre desdits leviers de contrôle (13, 55) qui sont aptes à donner des fonctions opératives instantanées,
caractérisé en ce que ledit assemblage comprend en outre, sur ledit corps (2), un interrupteur d'allumage (7).

2. Assemblage selon la revendication 1, où le bloc modulaire (4) pour opérer les essuie-glaces comprend un corps en forme de boîte (10) avec un couvercle de fermeture (11), entre ledit corps en forme de boîte (10) et le couvercle (11) il y étant supporté rotativement sur un goujon intérieur (14) un levier (12) pour opérer les essuie-glaces, ledit levier (12) étant muni, à l'intérieur dudit corps (10) en forme de boîte, d'une saillie (15) il y étant logé coulissant un élément (16) à pointe, balancé par des moyens résilients et engagé d'une manière amovible avec des sièges de position (17) pour ledit levier (12), caractérisé en ce que ledit assemblage comprend en outre des rouleaux (18, 19) d'ajustement de la position pour définir la position desdits leviers de contrôle (13, 55), lesdits rouleaux (18, 19) étant supportés rotatifs entre ledit corps en forme de boîte (10) et ledit couvercle (11) rélatif.

3. Assemblage selon la revendication 2, caractérisé en ce que lesdits rouleaux (18, 19) comprennent un corps (20) essentiellement quadrangulaire avec des goujons terminaux (21) supportés rotatifs entre ledit corps (10) en forme de boîte et le couvercle (11), ledit élément à pointe (16) étant apte à s'engager par contact avec ledit corps quadrangulaire (20).

4. Assemblage selon la revendication 2, caractérisé en ce que lesdits rouleaux (18, 19) sont munis d'un corps central (22) essentiellement cylindrique.

5. Assemblage selon la revendication 1, caractérisé en ce que ledit bloc modulaire (4) pour opérer les essuie-glaces est muni, sur le levier de contrôle (13), d'élément à goujon (25) pouvant s'engager avec une portion à fourche (26) d'un interrupteur oscillant (27) qui est pourvu de saillies (28) où il y a logé, d'une manière coulissante, des éléments de pression (31) balancés d'une manière résiliente par des ressorts (32) et s'engageant avec des lames de contact movibles (35) qui sont prévues pour contacter d'une manière sélective les contacts fixes électriques (37).

6. Assemblage selon la revendication 5, caractérisé en ce que lesdites lames movibles (35) de contact s'étendent périmétralement et se forment d'une bande bimétallique, présentant une couche en cuivre et une couche d'argent.

7. Assemblage selon la revendication 5, où lesdits contacts fixes (37) sont supportés par un porte-contacts (30) muni d'éléments à insertion (38) et aptes à être accouplés d'une manière amovible audit corps (10) en forme de boîte, caractérisé en ce que ledit porte-contacts (30) est muni d'une ailette à être engagé dans un siège correspondant dudit corps à forme de boîte (10) et est muni d'un élément denté de fond pouvant être engagé à déclic dans un évidement (39) dudit corps en forme de boîte (10).

8. Assemblage selon la revendication 5, caractérisé en ce que lesdites lames movibles (35) de contact et lesdits contacts fixes (37) se trouvent dans un plan essentiellement vertical.

9. Assemblage selon la revendication 1, caractérisé en ce que le bloc modulaire (5) pour opérer les éléments indicateurs de direction comprend une enveloppe(50) en forme de boîte pouvant être fermée par un élément de couverture (51), entre ladite enveloppe (50) en forme de boîte et l'élément de couverture (51) il y étant supporté rotativement un levier (52) de l'élément indicateur muni d'une saillie intérieure (56), où il y a monté coulissant un élément à pointe (57) à être engagé avec des rouleaux de position (58), ladite saillie intérieure (56) étant munie d'un pair d'ailettes latérales projetant pour accueillir automatiquement ledit levier d'élément indicateur (52) dans sa position de repos.

10. Assemblage selon la revendication 9, caractérisé en ce que ledit levier (52) d'élément indicateur est muni d'un pair de goujons eccentriques ( 61) s'engageant avec les bras (62) de fourche d'un interrupteur (63) supporté rotatif par un porte-contacts (65) pour ledit bloc (5) indicateur de direction.

11. Assemblage selon la revendication 10, caractérisé en ce que ledit interrupteur (63) supporte, d'une manière coulissante, au moyen d'éléments résilients, un élément de pression par contact (66), qui est balancé d'une manière résiliente contre une lame de contact oscillante (70), munie de gâches (71) centrales pivotées dans des cavités (73) définies par une lame de contact (74) supportée par ledit porte-contacts (65).

12. Assemblage selon la revendication 11, caractérisé en ce que ladite lame de contact oscillante (70) est munie, sur sa portion centrale, de portions évidées aptes à augmenter la vitesse d'ouverture et de fermeture des contacts.

13. Assemblage selon la revendication 1, caractérisé en ce que ledit assemblage comprend en outre un dispositif pour faire retourner automatiquement dans sa position de repos le levier dudit bloc d'indication de position, ledit dispositif comprenant une came allongée (80) pivotée sur une bride en forme de U (82) et supportée dans une cavité (83) dudit élément de couverture (51), ladite came (80) s'engageant avec un ressort (84) à goujon logé dans un siège évidé (85) défini par ladite came et présentant ses portions d'extrémité libre (84a, 84b) s'arrêtant sur des arrêts (86) de ladite bride (82) en forme de U, avec ladite came (80) il y étant rigide une saillie (87) s'étendant de ladite bride (82) et s'engageant avec un élément, (88) de retour associé au volant de direction.

14. Assemblage selon la revendication 1, caractérisé en ce que lesdits moyens pour contrôler les fonctions opératives instantanées comprennent un élément (90) en forme de bouton poussoir pivoté à l'intérieur de son levier de contrôle (12) et formé avec un siège (91) à l'intérieur duquel il y a logé un plongeur (93) opérant sur la portion évidée (94) d'un contact movible (95) qui, lorsque ledit bouton poussoir (90) est pressé, tient le contact movible (94) en contact avec le contact fixe (96).

15. Assemblage selon la revendication 1, caractérisé en ce que lesdits moyens pour contrôler les fonctions opératives instantanées comprend un bouton poussoir (100) ayant un fuseau axial (101) guidé coulissant dans un trou (102) à l'intérieur dudit levier (51), ledit bouton-poussoir (100) étant tenu d'une manière résiliente dans une position extérieure par un ressort de retour (104) opérant entre ledit bouton poussoir et un épaulement (105) formé à l'intérieur dudit levier (52), ledit fuseau (101) supportant des contacts movibles (106) qui sont pressés d'une manière résiliente par un ressort de compensation (107) apte à former une course extra lorsque le contact est actionné.
